# EUROPEAN PATENT SPECIFICATION

(11) **EP 2 709 501 B1**
(45) Date of publication and mention of the grant of the patent: **18.03.2015**
(21) Application number: 12714023.4
(22) Date of filing: 17.04.2012
(51) Int. Cl.: A47J 31/36

(54) **INFUSION ASSEMBLY FOR CAPSULES**
INFUSIONSANORDNUNG FÜR KAPSELN
ENSEMBLE D'INFUSION POUR CAPSULES

(30) Priority: 18.05.2011 IT MI20110877
(43) Date of publication of application: 26.03.2014
(73) Proprietor: Swiss Caffe Asia Ltd, Hong Kong (HK)
(72) Inventor: AARDENBURG, Cornelius J. M., CH-6900 Lugano (CH); VALSECCHI, Massimiliano, I-20824 Lazzate (IT)
(74) Representative: Modiano, Micaela Nadia
(86) International application number: PCT/EP2012/057010
(87) International publication number: WO 2012/156166

(56) References cited:
- EP-A1- 0 468 080
- WO-A1-2005/060801
- WO-A2-2010/142417
- FR-A1- 2 788 955

## Description

The present invention relates to an infusion assembly for capsules and/or pods for obtaining infused beverages and the like.

In the catering field and, especially, in the field of beverages obtained by infusion of aromatized powders, conventional machines for dispensing infused beverages, such as for example the ones dedicated to the espresso coffee making, usually comprise an infusion assembly which defines internally an infusion chamber in which a capsule or pod is arranged which contains internally the powder through which the water is to be passed in order to obtain the infusion.

More precisely, the infusion chamber is delimited, at least on one of its sides, by an element that can be removed when required so as to allow the ejection and/or replacement of the capsule or pod.

Such infusion assemblies of the known type are not devoid of drawbacks, including the fact that they force the operator to perform two operations in order to change the capsule or pod: the first one consists in removing the capsule or pod that has already been filtered and the second one consists in replacing it with a new one.

Moreover, attention must be called to the fact that although the replacement with a new capsule or pod may be a substantially simple operation because it consists in positioning the new capsule or pod in an adapted seat or insertion channel, the removal of the already-filtered capsule or pod might not be a simple and quick operation.

The infusion chambers of infusion assemblies of the known type, by defining a closed space, are in fact difficult to reach for the operator.

In order to eliminate this drawback, in recent years ejection devices have been perfected which are adapted to remove the capsule or pod from the infusion chamber in a manner which is automatic but nevertheless complicated.

Moreover, another drawback of infusion assemblies of the known type consists in that they are designed for a single specific type of capsule or pod, i.e., to be more precise, for a single supplier of capsules and/or pods for infusions.

Document WO-A-2005/060801 discloses an infusion assembly according to the preamble of independent claim 1. In fact, many companies specialized in the production of capsules and pods for infusions are on the market and each of the capsules and pods can be inserted in an infusion assembly that has an infusion chamber whose inner geometry matches substantially the outer geometry of the capsule and/or pod.

The aim of the present invention is to provide an infusion assembly, particularly for capsules and/or pods for obtaining infused beverages and the like, that allows easy, quick and safe ejection of the pod or capsule from the infusion chamber in a single operation and replacement with a new one.

Within this aim, an object of the present invention is to provide an infusion assembly capable of giving the greatest assurances of reliability, quality, repeatability and safety in use.

Another object of the invention is to provide an infusion assembly that can be used with capsules and pods of different shapes.

This aim and these and other objects which will become better apparent hereinafter are achieved by an infusion assembly according to independent claim 1.

Further characteristics and advantages will become better apparent from the description of two preferred but not exclusive embodiments of an infusion assembly, particularly for capsules and/or pods for obtaining infused beverages and the like, illustrated by way of non-limiting example in the accompanying drawings, wherein:
Figure 1 is a perspective view of a first embodiment of an infusion assembly, particularly for capsules and/or pods for obtaining infused beverages and the like, according to the invention, in its operating configuration;
Figure 2 is a bottom plan view of the infusion assembly shown in Figure 1;
Figure 3 is a sectional view, taken along the sectional line III-III, of the infusion assembly shown in Figure 2;
Figure 4 is a sectional view, taken along the sectional line IV-IV, of the infusion assembly shown in Figure 3;
Figure 5 is a rear elevation view of the infusion assembly shown in Figure 1;
Figure 6 is a sectional view, taken along the sectional line VI-VI, of the infusion assembly shown in Figure 5;
Figure 7 is a sectional view, taken along the sectional line VII-VII, of the infusion assembly shown in Figure 5;
Figure 8 is a perspective view of the infusion assembly shown in Figure 1 during a first opening step;
Figure 9 is a perspective view of the infusion assembly shown in Figure 1 during a second opening step;
Figure 10 is a top plan view of the infusion assembly shown in Figure 9;
Figure 11 is a sectional view, taken along the sectional line XI-XI, of the infusion assembly shown in Figure 10;
Figure 12 is a sectional view, taken along the sectional line XII-XII, of the infusion assembly shown in Figure 10;
Figure 13 is a perspective view of the infusion assembly shown in Figure 1 during the ejection of the capsule;
Figure 14 is a sectional view, taken along the sectional line XIV-XIV, of the infusion assembly shown in Figure 13;
Figure 15 is a sectional view, taken along the sectional line XV-XV, of the infusion assembly shown in Figure 14;
Figure 16 is a sectional view, taken along the sectional line XVI-XVI, of the infusion assembly shown in Figure 14;
Figure 17 is a perspective view of the infusion assembly shown in Figure 1, ready to accommodate a new capsule;
Figure 18 is a sectional view, taken along the sectional line XVIII-XVIII, of the infusion assembly shown in Figure 17;
Figure 19 is a sectional view, taken along the sectional line XIX-XIX, of the infusion assembly shown in Figure 18;
Figure 20 is a sectional view, taken along the sectional line XX-XX, of the infusion assembly shown in Figure 18;
Figure 21 is a perspective view of the infusion assembly shown in Figure 1 during the insertion of a new capsule;
Figure 22 is a sectional view, taken along the sectional line XXII-XXII, of the infusion assembly shown in Figure 21;
Figure 23 is a sectional view, taken along the sectional line XXIII-XXIII, of the infusion assembly shown in Figure 22;
Figure 24 is a sectional view, taken along the sectional line XXIV-XXIV, of the infusion assembly shown in Figure 22;
Figure 25 is a perspective view of the infusion assembly shown in Figure 1 during its closure;
Figure 26 is a sectional view, taken along the sectional line XXVI-XXVI, of the infusion assembly shown in Figure 25;
Figure 27 is a sectional view, taken along the sectional line XXVII-XXVII, of the infusion assembly shown in Figure 26;
Figure 28 is a sectional view, taken along the sectional line XXVIII-XXVIII, of the infusion assembly shown in Figure 26;
Figure 29 is a perspective view of a second embodiment of an infusion assembly, particularly for capsules and/or pods for obtaining infused beverages and the like, according to the invention, in its operating configuration;
Figure 30 is a sectional view, taken along the sectional line XXX-XXX, of the infusion assembly shown in Figure 29;
Figure 31 is a sectional view, taken along the sectional line XXXI-XXXI, of the infusion assembly shown in Figure 30;
Figure 32 is a perspective view of the infusion assembly shown in Figure 29 during the ejection of the pod;
Figure 33 is a sectional view, taken along the sectional line XXXIII-XXXIII, of the infusion assembly shown in Figure 32;
Figure 34 is a sectional view, taken along the sectional line XXXIV-XXXIV, of the infusion assembly shown in Figure 33;
Figure 35 is a perspective view of the infusion assembly shown in Figure 29 during the second opening step;
Figure 36 is a sectional view, taken along the sectional line XXXVI-XXXVI, of the infusion assembly shown in Figure 35;
Figure 37 is a sectional view, taken along the sectional line XXXVII-XXXVII, of the infusion assembly shown in Figure 36;
Figure 38 is a perspective view of a first variation of the infusion assembly shown in Figure 1 and of a capsule;
Figure 39 is an upper perspective view and a bottom perspective view, respectively, of the capsule to be used in the infusion chamber shown in Figure 38;
Figure 40 is a perspective view of details of the infusion assembly shown in Figure 38;
Figures 41 and 42 are two perspective views of details of a second capsule-based variation of the infusion assembly shown in Figure 1;
Figures 43 and 44 are two perspective views of details of a third capsule-based variation of the infusion assembly shown in Figure 1;
Figures 45 and 46 are two perspective views of details of a fourth capsule-based variation of the infusion assembly shown in Figure 1.

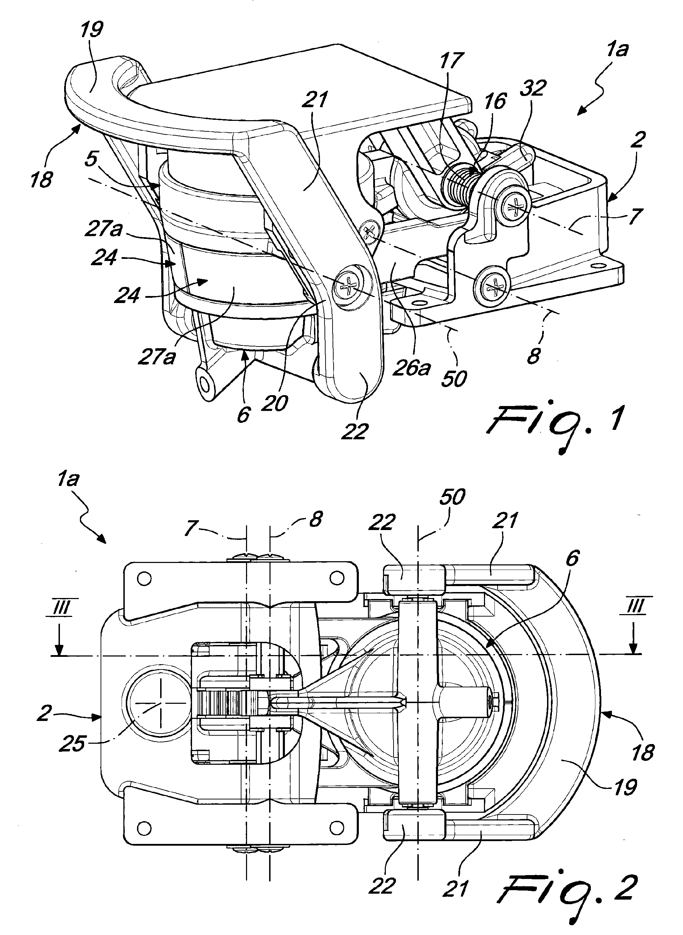

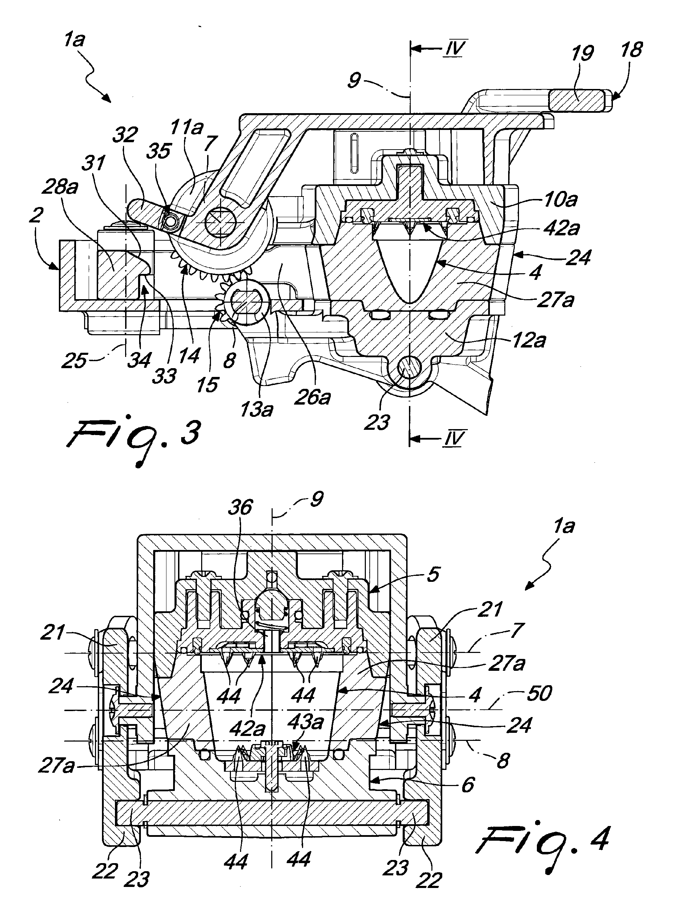

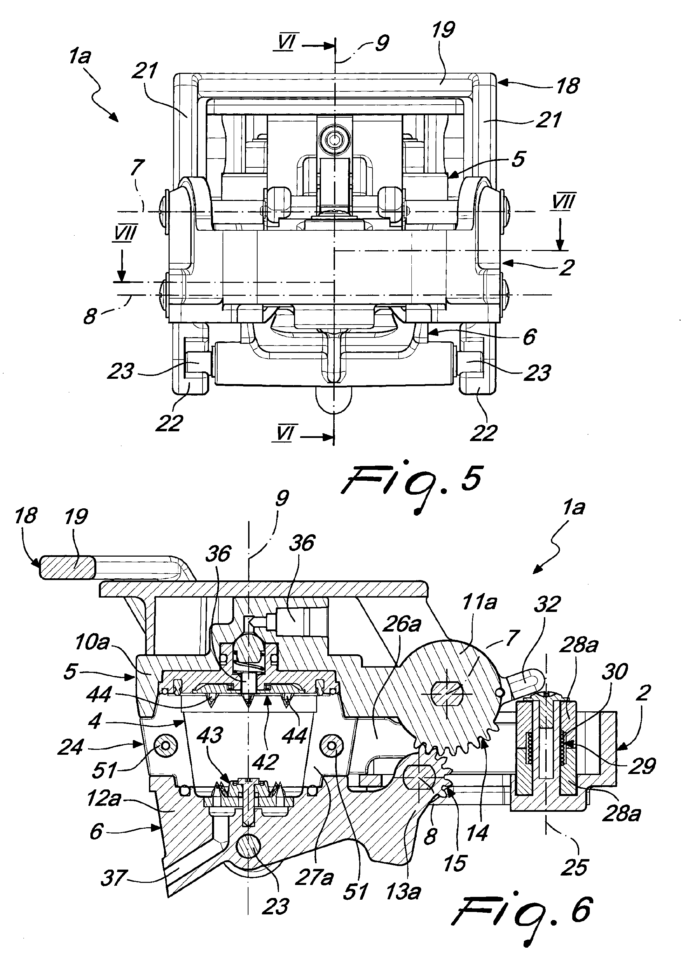

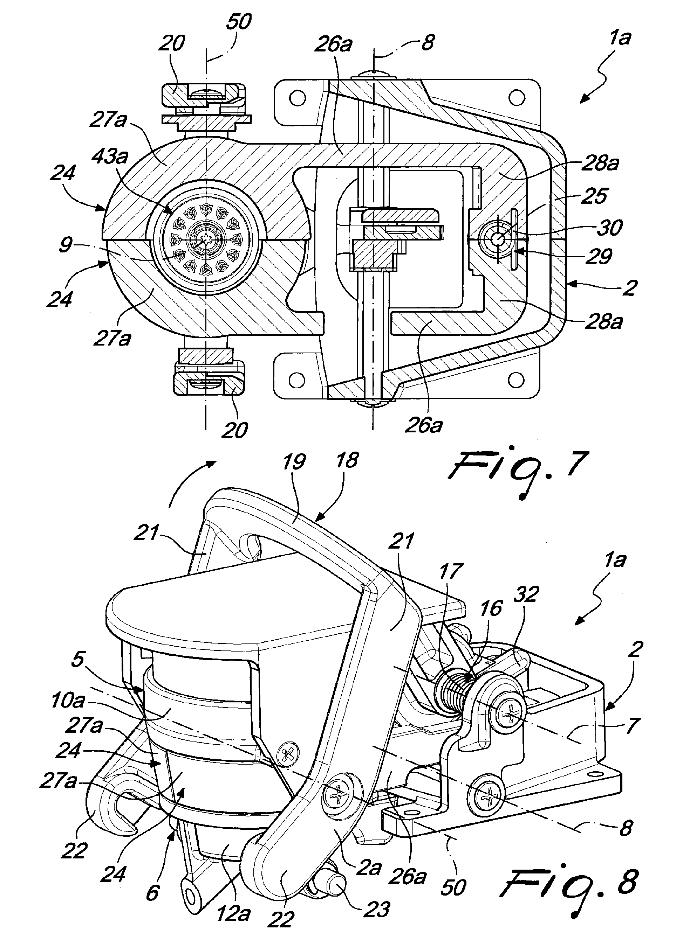

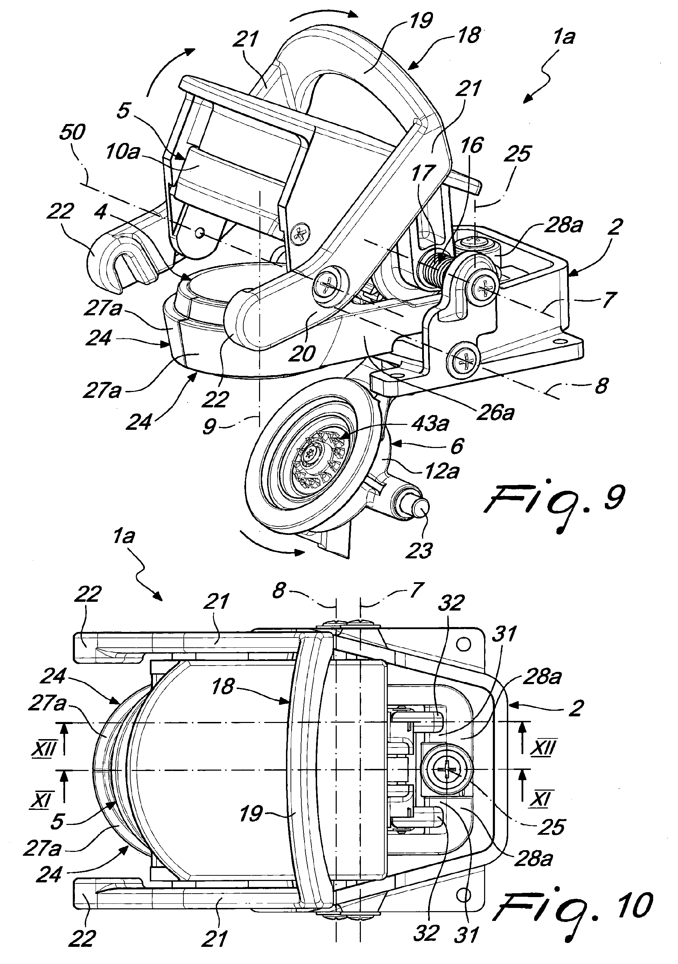

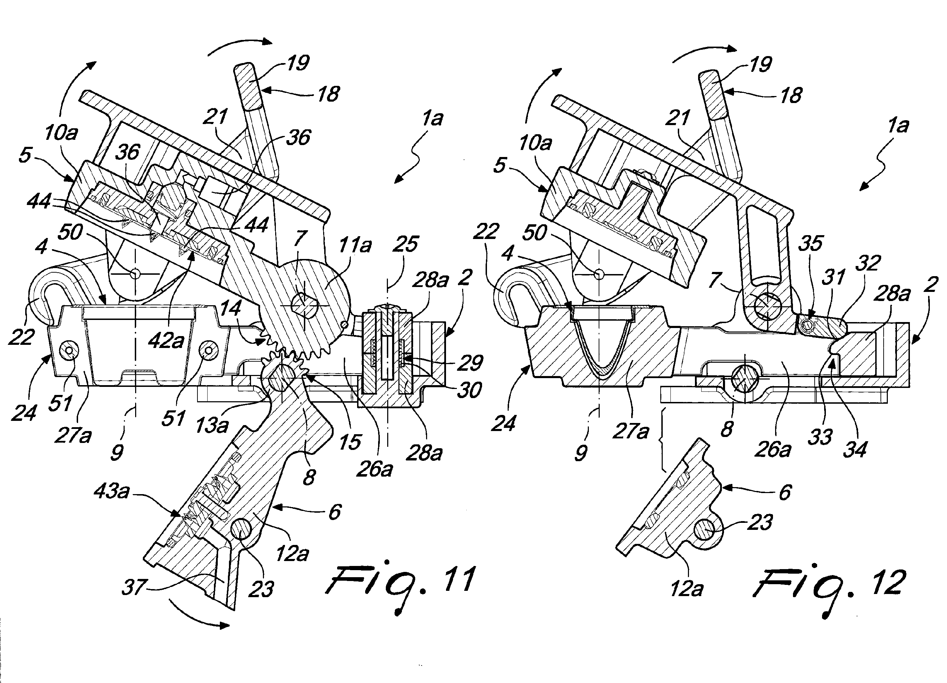

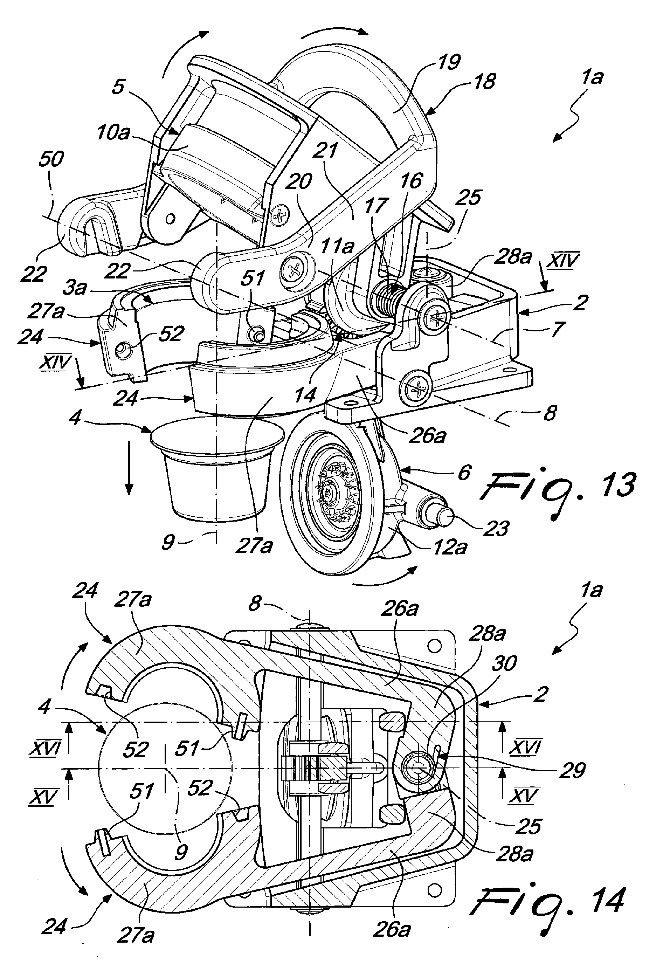

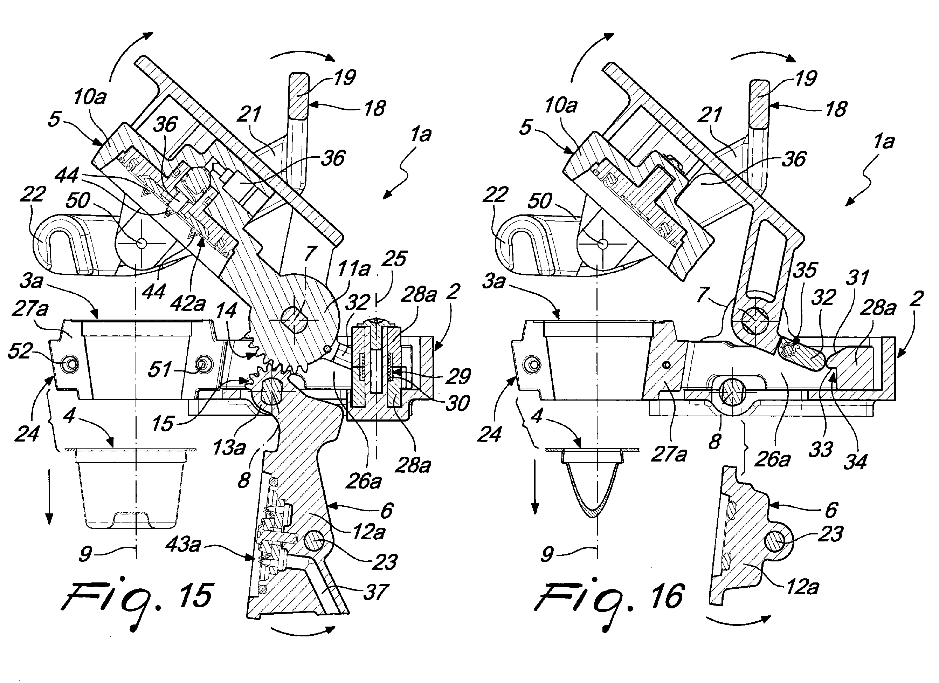

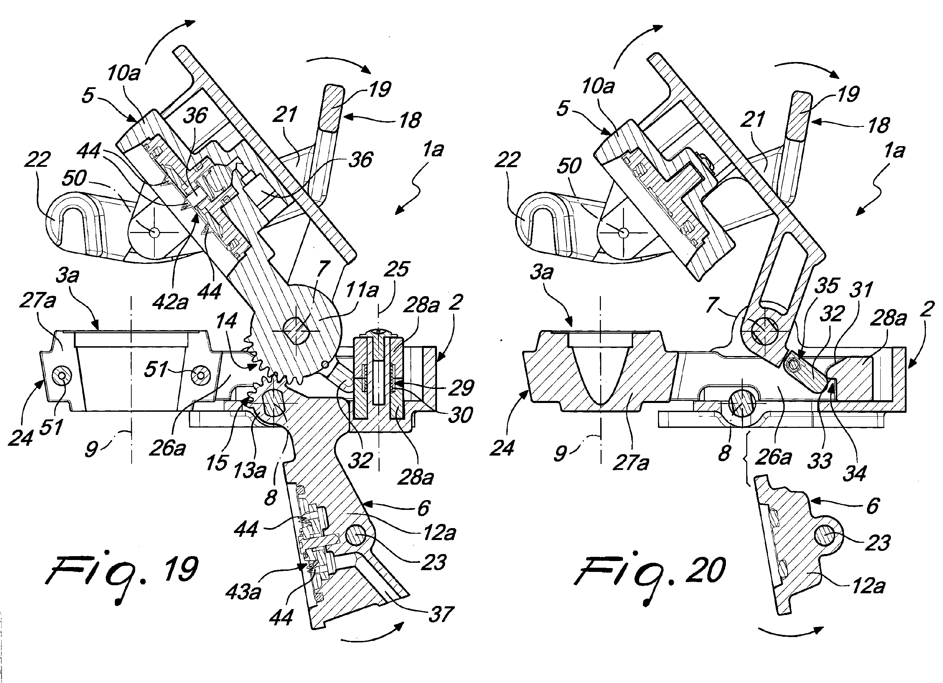

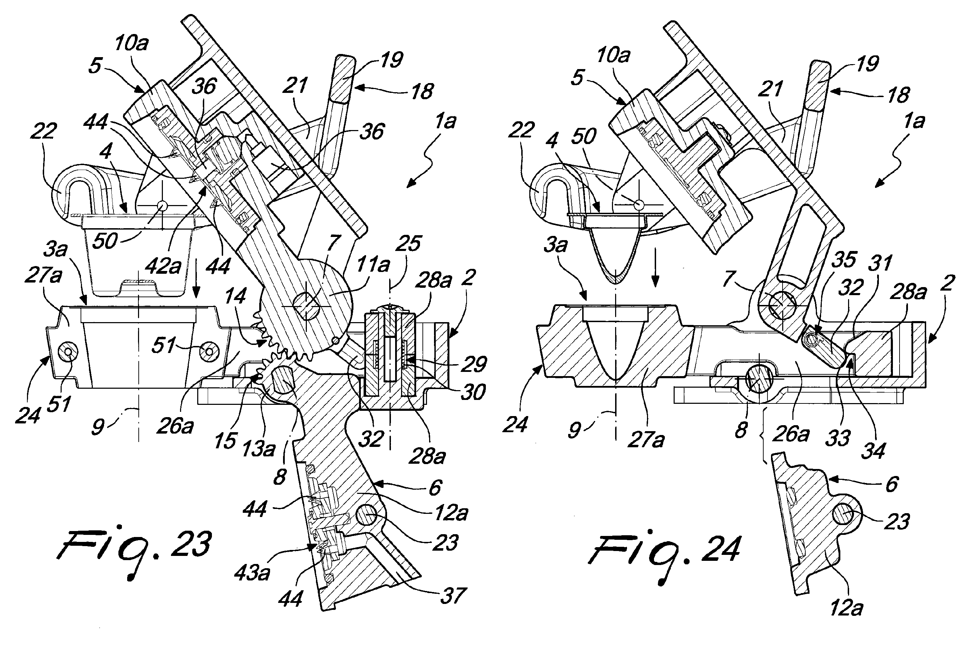

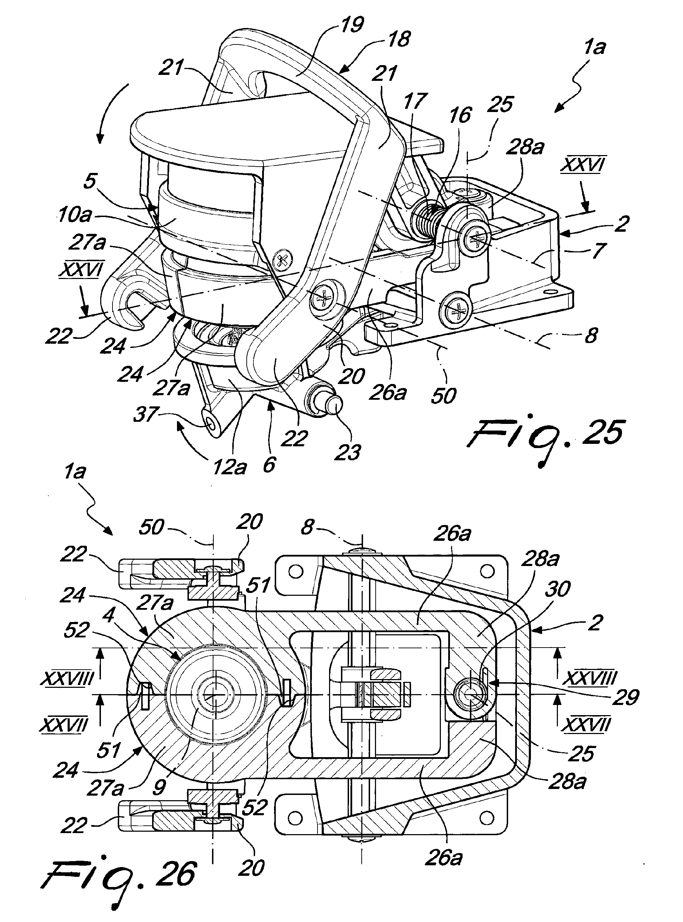

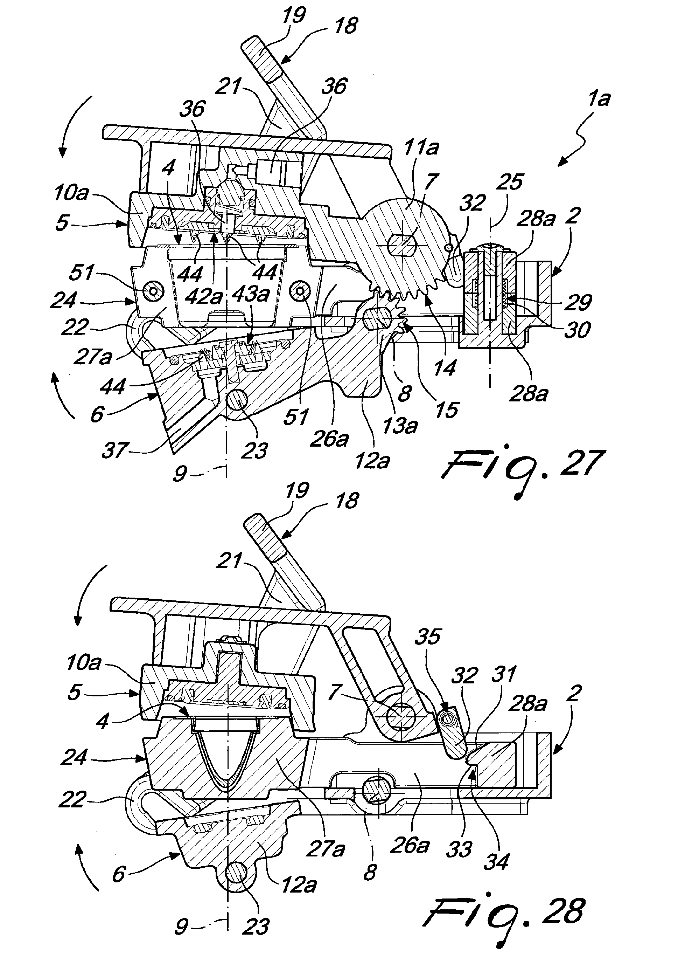

With reference to Figures 1 to 28, the infusion assembly, particularly for capsules for obtaining infused beverages and the like, generally designated in its first proposed embodiment by the reference numeral 1a, comprises a main body 2, which can be associated with a coffee machine or the like, not shown, and supports a plurality of elements adapted to define an infusion chamber 3a having a substantially cylindrical shape and adapted to accommodate a capsule 4 for infusions.

According to the invention, the infusion chamber 3a is delimited at least in an upper region and at least in a lower region, respectively, by an upper element 5 and by a lower element 6, which are pivoted to the main body 2, respectively, about two pivoting axes 7 and 8 which are substantially parallel to each other and are substantially perpendicular to the axis of revolution 9 of the infusion chamber 3a.

Advantageously, the upper element 5 and the lower element 6 are connected kinematically to each other for their synchronized movement between a closed position, in which the upper element 5 and the lower element 6 delimit the infusion chamber 3a, and an open position, in which the upper element 5 and the lower element 6 are spaced from the infusion chamber 3a for the evacuation of the capsule 4 from the infusion chamber 3a.

More specifically, the upper element 5 is provided by a first lever 10a, which is substantially disk-shaped with a first tab 11a which is pivoted to the main body 2 about the first pivoting axis 7, and the lower element 6 is provided by a second lever 12a, which is substantially disk-shaped with a second tab 13a which is pivoted to the main body 2 about the second pivoting axis 8 parallel to the first pivoting axis 7.

The movement cited above is provided by means of two toothed profiles 14 and 15, which are defined directly by the tabs 11a and 13a and mesh with each other about the pivoting axes 7 and 8, with a gear ratio that can vary according to the desired effect.

In this manner, the upper element 5 and the lower element 6 can move from the open position to the closed position and vice versa, respectively, in contrast with and by way of the action of first elastic means 16, which are interposed between the main body 2 and at least the upper element 5 or the lower element 6.

More precisely, the first elastic means 16 can consist of two torsion springs 17, which are keyed, one for each side, on the articulation pivot between the upper element 5 and the main body 2 and are adapted to keep the upper element 5 spaced from the infusion chamber 3a in order to allow the operator to insert the capsule 4.

In order to ensure mutual locking between the upper element 5 and the lower element 6 in contrast with the action of the first elastic means 16 during the infusion step, at least one substantially U-shaped handle 18 is provided, which is associated with the upper element 5 and can engage the lower element 6.

As shown in the figures, the curved portion 19 of the handle 18 protrudes from the upper element 5 and the central portions 20 of the arms 21 of the handle 18 are pivoted to the upper element 5 about the pivoting axis 50.

In the closed position, the end portions 22 of the arms 21 can engage respective retention pins 23 defined by the lower element 6 in order to lock the upper element 5 and the lower element 6 in the closed position.

Advantageously, in order to provide an automatic ejection of the capsule 4, as will be described in greater detail hereinafter, the infusion chamber 3a is delimitated laterally by a pair of jaw elements 24, which can be mutually engaged and are pivoted to the main body 2 about a third pivoting axis 25, which is substantially at right angles to the two pivoting axes 7 and 8 for the disengagement of the two jaw elements 24, with consequent evacuation of the capsule 4 by gravity from the infusion chamber 3a.

Conveniently, on the mutual engagement surfaces of the two jaw elements 24 centering pins 51 can be provided, which can be fit in respective centering holes 52.

More precisely, the two jaw elements 24 are connected kinematically to at least the upper element 5 or the lower element 6 for their synchronized movement with the upper element 5 and the lower element 6 during transition from the closed position to the open position.

More specifically, the jaw elements 24 are provided by two third levers 26a, each of which has a substantially C-shaped portion 27a, such as to surround completely, together with the other substantially C-shaped portion 27a of the other third lever 26a, the capsule 4.

Moreover, each one of the third levers 26a comprises an end portion 28a, which is spaced from the respective substantially C-shaped portion 27a, which is pivoted to the main body 2 about the third pivoting axis 25 and is connected kinematically to at least one between the upper element 5 and the lower element 6.

In this manner, as shown in the figures, the two jaw elements 24 can move from an engagement position, which corresponds to the completely closed or open position of the upper element 5 and of the lower element 6, to a disengagement position, which corresponds to a position that is intermediate between the closed position and the open position of the upper element 5 and of the lower element 6, and vice versa.

This motion occurs, respectively, in contrast with and by way of the action of second elastic means 29, which are interposed between the main body 2 and the two jaw elements 24.

More precisely, the second elastic means 29 can consist of a caliper spring 30 keyed on the pivot for pivoting between the two jaw elements 24 and the main body 2 and adapted to keep the two jaw elements 24 clamped onto each other so as to define the infusion chamber 3a and allow the operator to insert the capsule 4.

Advantageously, the movement of the two jaw elements 24 is allowed by their coupling to the upper element 5.

More precisely, each end portion 28 of the two jaw elements 24 comprises an inclined plane 31, which is spaced from the third pivoting axis 25 and can be engaged by sliding, during transition between the engagement position and the disengagement position, with a respective cam element 32 associated with the upper element 5 for the rotation of each jaw element 24 about the third pivoting axis 25.

In this manner, as a consequence of the mutual spacing of the upper element 5 and of the lower element 6, the jaw elements 24 open and let the capsule 4 fall by gravity.

In order to allow the elastic return of the two jaw elements 24 to their engagement position while keeping the upper element 5 and the lower element 6 mutually spaced, so as to allow the operator to place a new capsule 4, each inclined plane 31 ends in a downward region with a step 33, which is adapted to define a cavity 34 such as to accommodate the respective cam element 32.

Conveniently, each cam element 32 is associated with the upper element 5 by means of an elastically flexible support 35, such as to allow the cam element 32 to pass beyond the respective step 33 in the final part of the transition from the open position to the closed position.

Finally, the first lever 10a, which defines the upper element 5, defines therein at least one infusion channel 36, which is connected to the infusion chamber 3a when the upper element 5 is arranged in the closed position.

The infusion channel 36 is per se known and therefore is not described in detail.

In the same manner, the second lever 12a, which defines the lower element 6, defines therein at least one discharge channel 37, which is connected to the infusion chamber 3a when the lower element 6 is arranged in the closed position.

The discharge channel 37 is per se known and therefore is not described in detail.

As already mentioned, in this embodiment the infusion chamber 3a is shaped geometrically in order to accommodate at least one capsule 4 for infusions.

More precisely, for a capsule 4 having a frustum-like geometry the jaw elements 24, once mutually associated, can define directly an infusion chamber 3a with a geometry adapted to accommodate the capsule 4 without play.

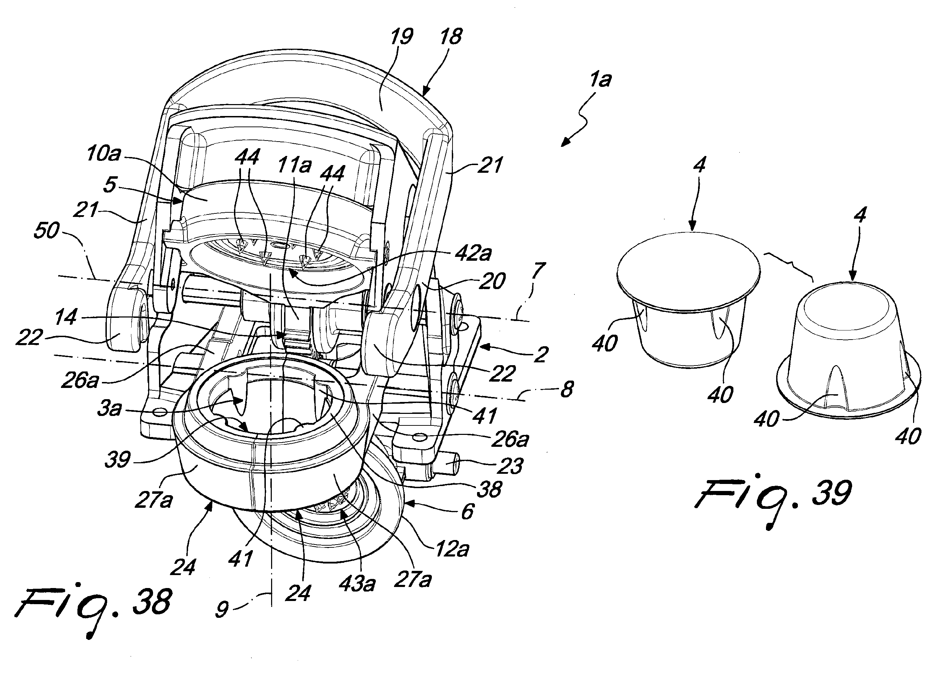

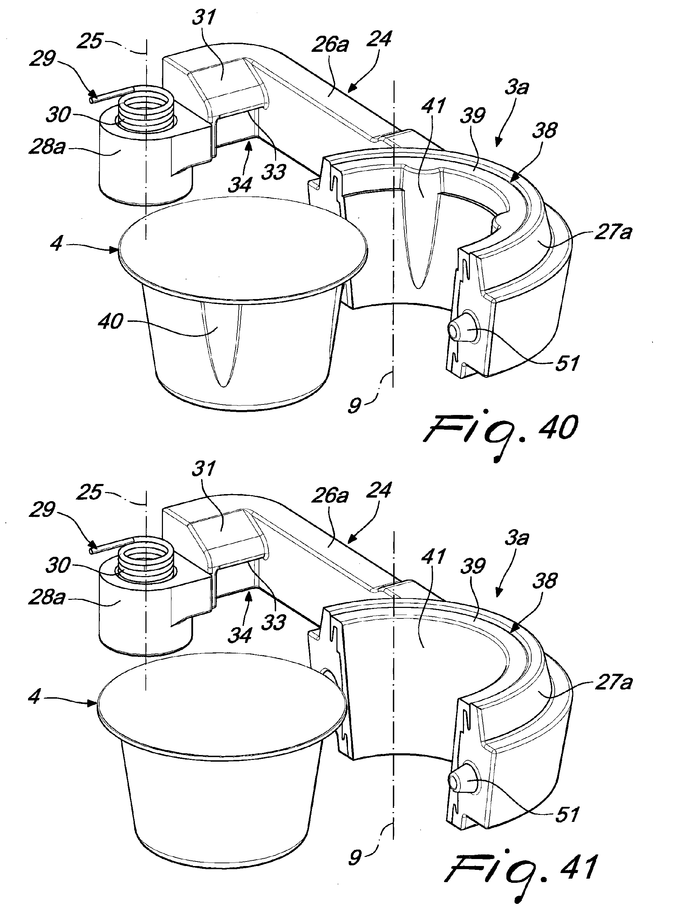

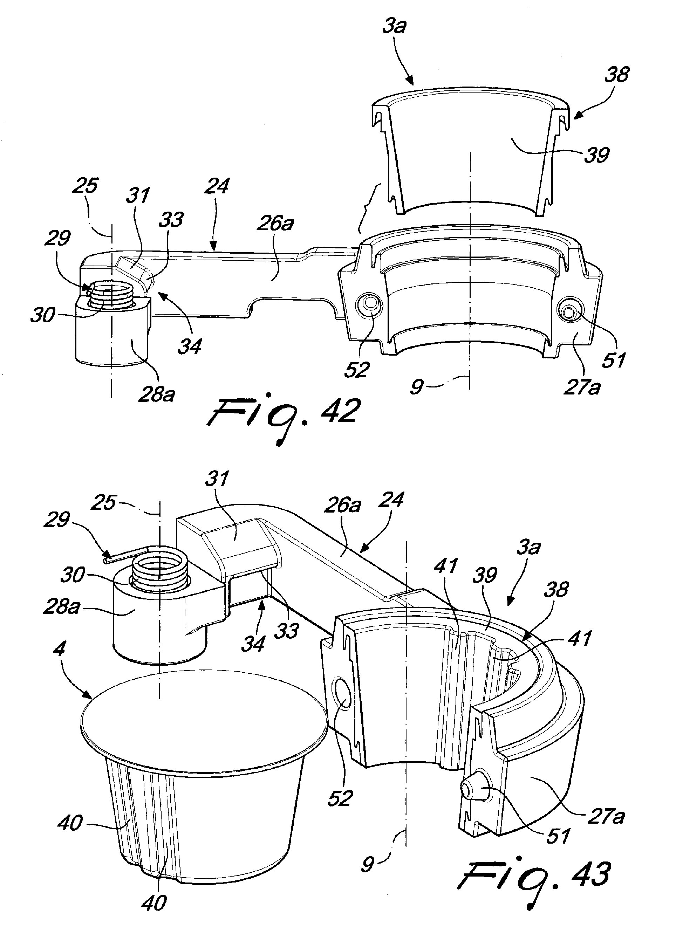

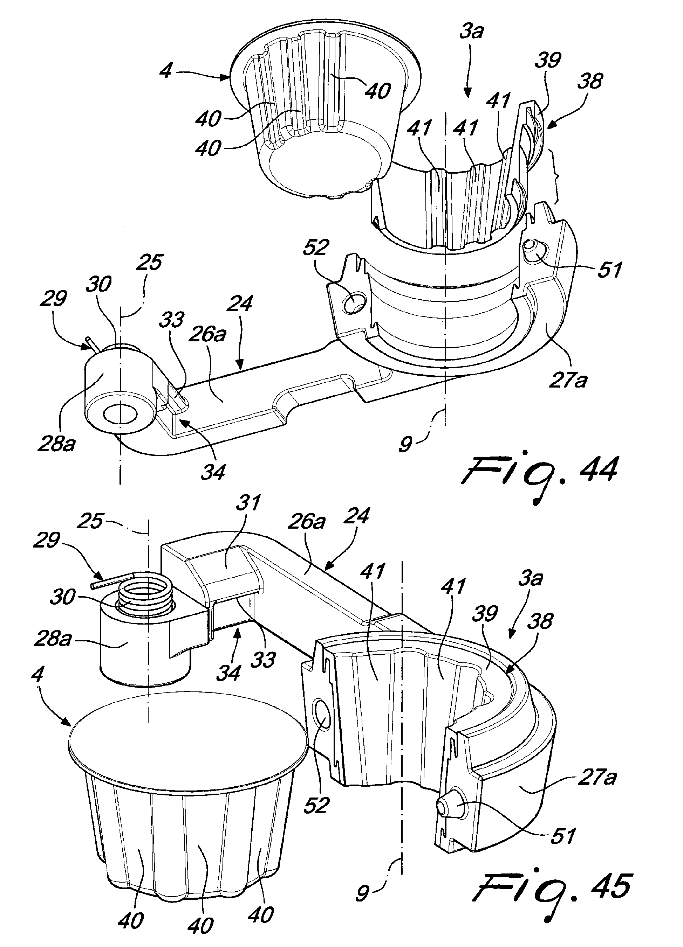

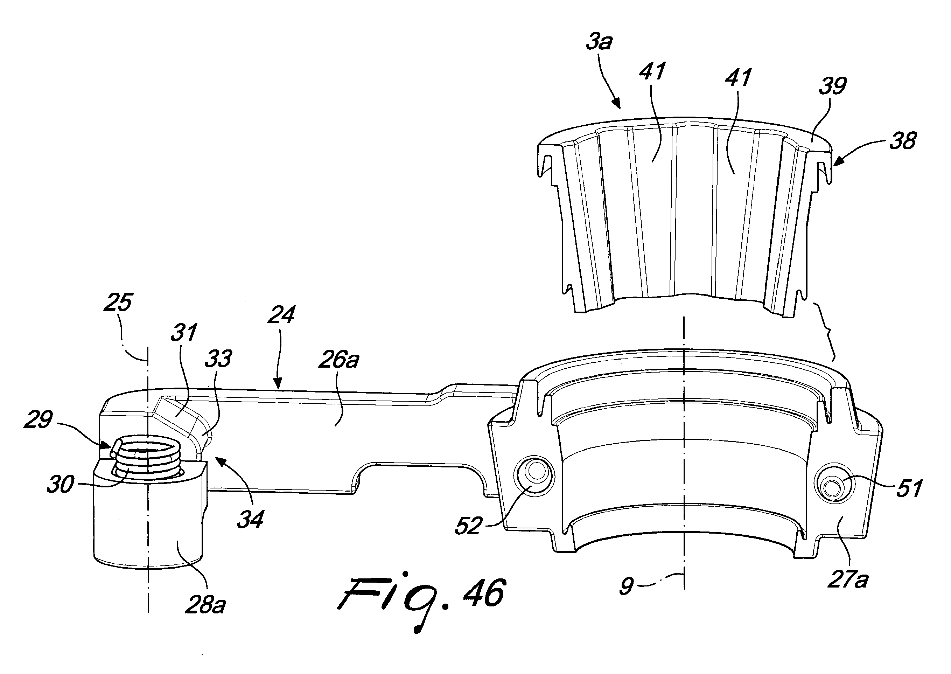

Advantageously, as shown in Figures 38 to 46, in order to make the infusion assembly 1a usable with a plurality of capsules 4 having different shapes, for example supplied by different suppliers, in the infusion chamber 3a means 38 for adapting the capsule 4 in the infusion chamber 3a can be provided.

In the variations shown in Figures 38 to 46, the adapter means 38 comprise a circular body 39, which can be inserted by form-fit coupling between the substantially C-shaped portions 27a of the jaw elements 24.

More precisely, the body 39 is of the hollow through type and defines the infusion chamber 3a inside it.

In this manner, the user, depending on the shape of the capsule 4, selects the body 39 suitable to adapt the infusion assembly to the capsule 4.

Moreover, both on the capsule 4 and on the body 39, respectively, a plurality of grooves 40 and ribs 41 can be provided, which mutually match up and are adapted to ensure a correct arrangement by form-fit engagement of the capsule 4 in the infusion chamber 3a. Moreover, this refinement prevents the introduction of capsules 4 that are different from the ones intended by the body 39.

If the capsule 4 is of the piercing type, both on the upper element 5 and on the lower element 6 there can be perforated plates 42a and 43a provided with piercing spikes 44 which are adapted to pierce the capsule 4 in the transition from the open position to the closed position.

Since the perforated plates 42a, 43a and the piercing spikes 44 are per se known to the person skilled in the art, they will not be described in detail.

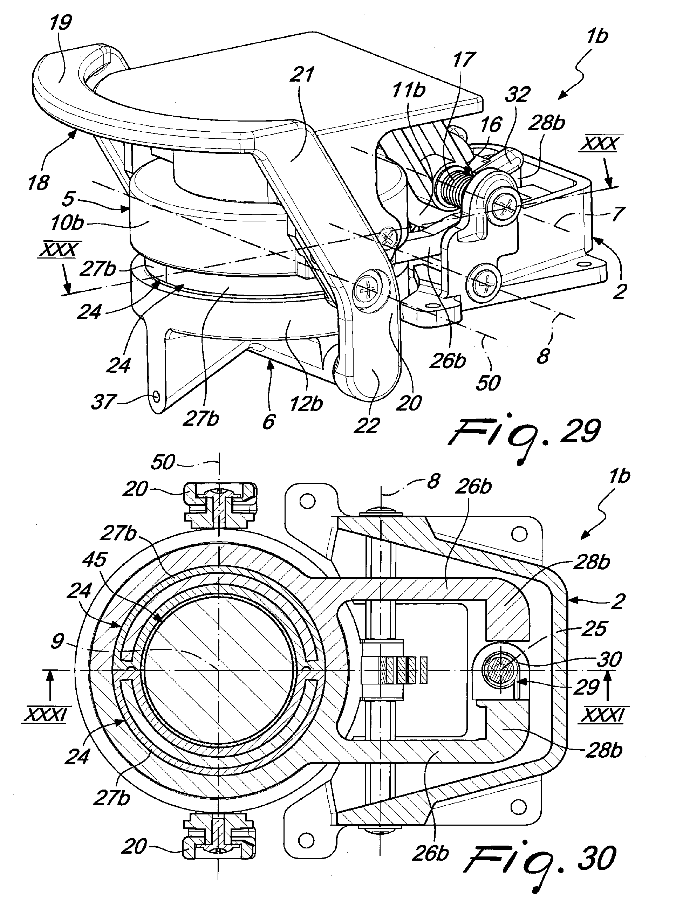

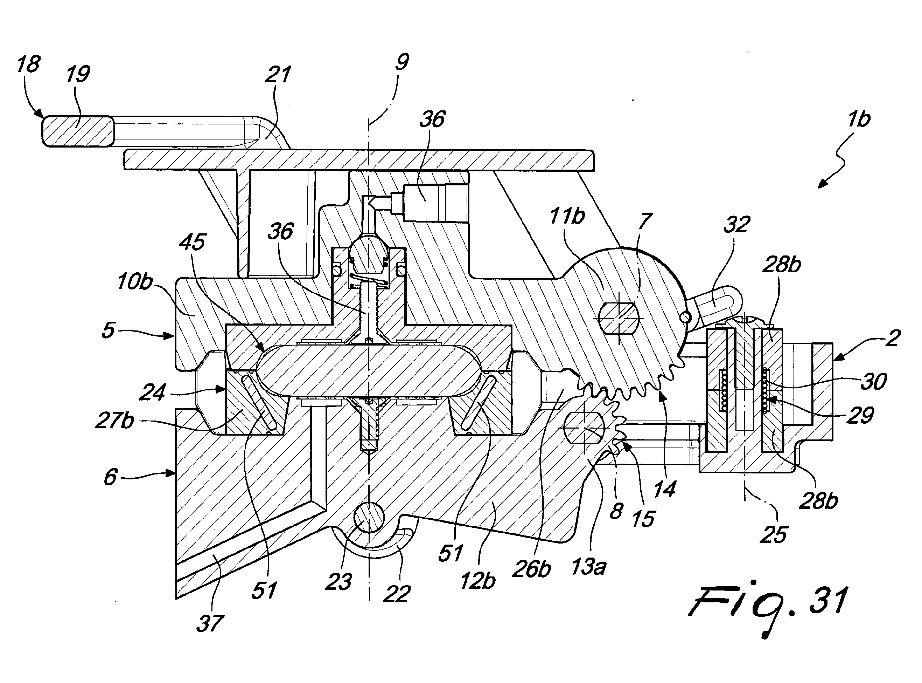

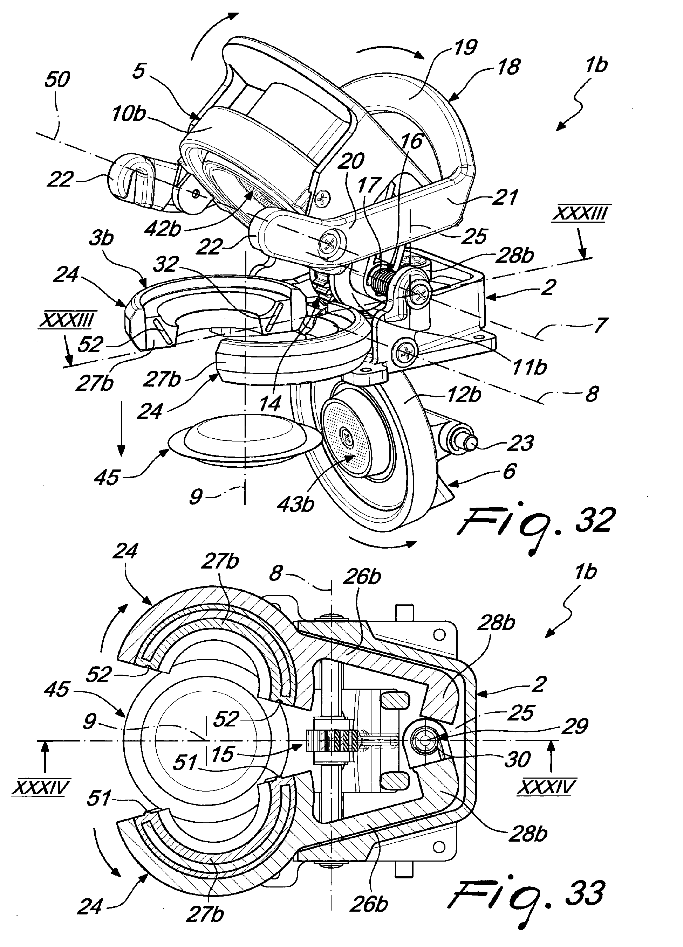

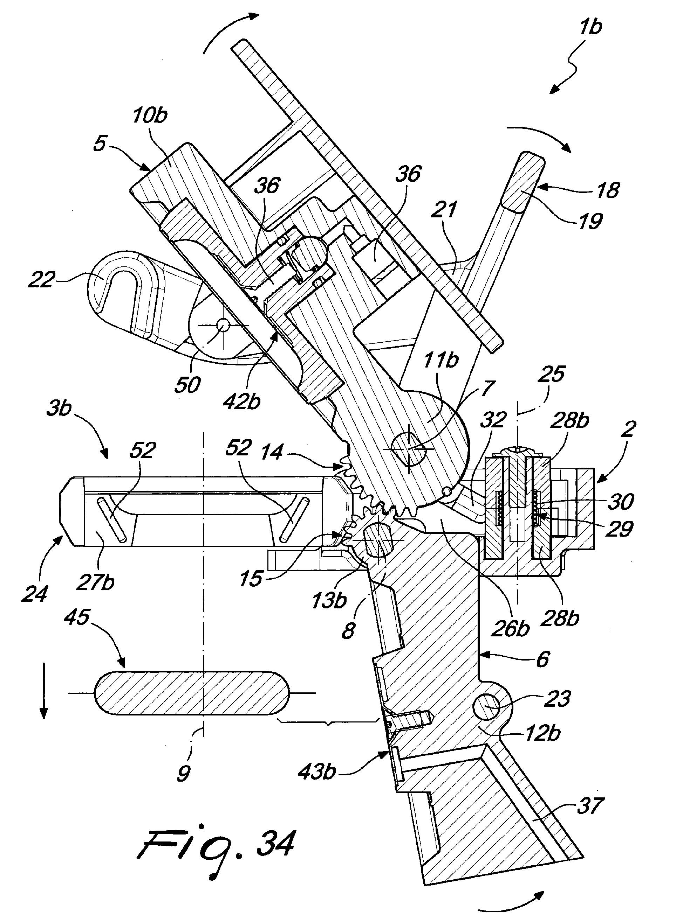

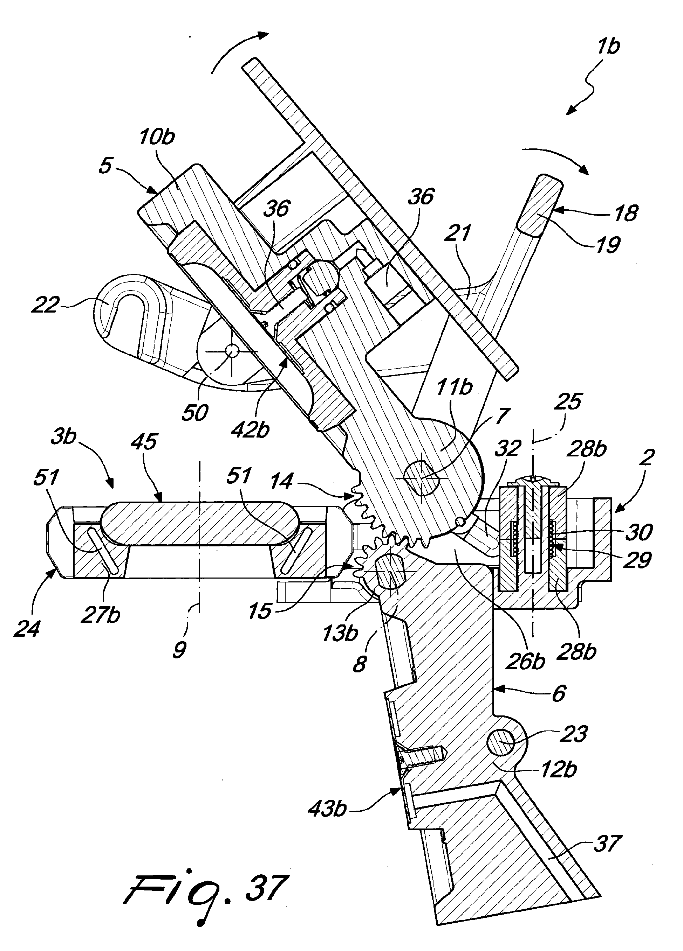

In a second embodiment, shown in Figures 29 to 37, the infusion assembly, generally designated by the reference numeral 1b, instead of working with a capsule 4 works with a pod 45.

In the second embodiment, the infusion assembly 1b has substantially the same components as the infusion assembly 1a of the first embodiment.

In view of what has been said above, therefore, the components that are common to the two proposed embodiments are designated by the same reference numerals.

Likewise, the components that are similar but not completely equivalent or otherwise shaped differently shall be designated by the same reference numeral as the ones designated in the first embodiment but by replacing the reference numeral suffix letter "a" with the letter "b".

In particular, the infusion chamber 3a of the infusion assembly 1b, by having to accommodate a pod 45 that is substantially disk-shaped, is also disk-shaped, with a consequent geometric variation of the substantially C-shaped portions 27b of the jaw elements 24.

Moreover, since the pod 45 is made of a water-permeable material, no piercing thereof is required. This means that the perforated plates 42b and 43b have no piercing spikes.

If the pod 45 is made of a material that is not permeable to water, such as for example aluminum, the perforated plates 42b and 43b can be provided with piercing spikes.

Moreover, in order to be able to use the infusion assembly 1b also with a pod 45 of a different shape, means, not shown, for adapting of the infusion chamber 3b with respect to the pod 45 may be provided.

Operation of the infusion assemblies 1a and 1b in the two proposed embodiments is as follows.

Starting from the closed position, shown in the two proposed embodiments respectively in Figures 1 and 29, by gripping the handle 18 and turning it about its pivoting axis 50 with respect to the upper element 5, it is possible to disengage the end portions 22 of the arms 21 from the respective retention pins 23 defined by the lower element 6, releasing the lower element 6 from the upper element 5.

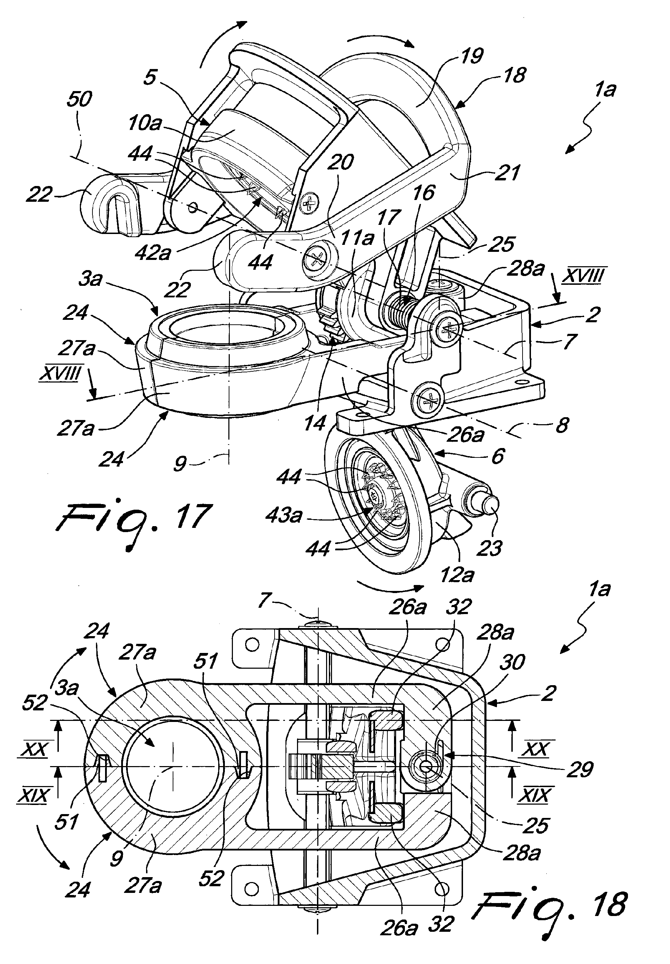

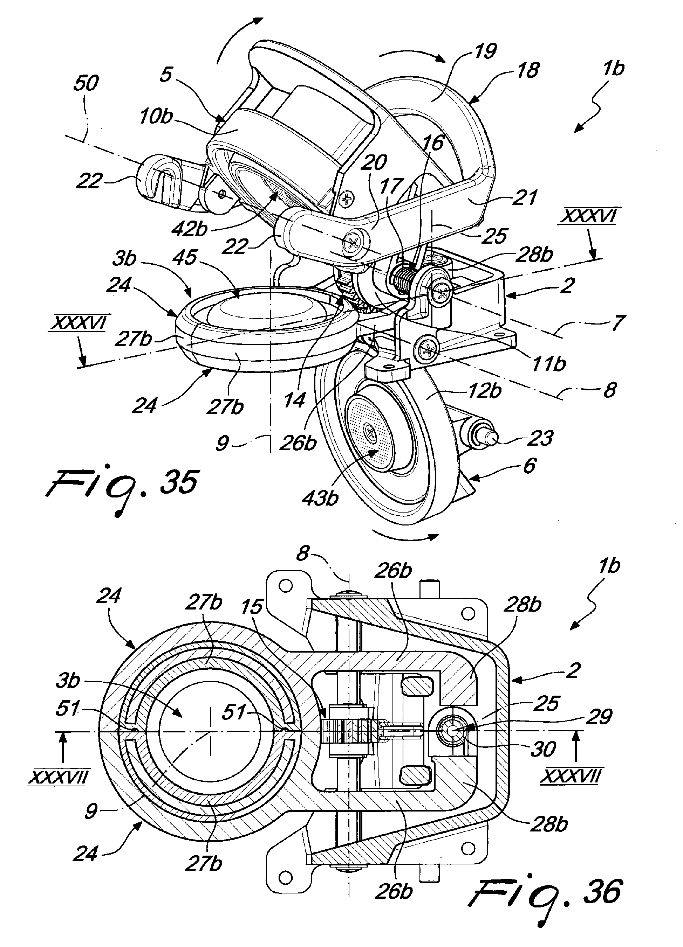

Due to the spring 17 and the toothed profiles 14 and 15, the upper element 5 and the lower element 6 rotate with respect to the main body 2 about the two pivoting axes 7 and 8 until they reach the configuration shown in Figures 17 and 35.

During the transition, which can occur in a completely automatic manner, if the torsion spring 17 is capable of generating an elastic reaction that is strong enough to allow the cam elements 32 to pass beyond the step 33 at the end of the inclined planes 31, or with the manual aid of the user, due to the engagement of the cam elements 32 with the inclined planes 31, the jaw elements 24 open, allowing the capsule 4 or the pod 45 to fall by gravity, and then close automatically due to the action of the caliper spring 30.

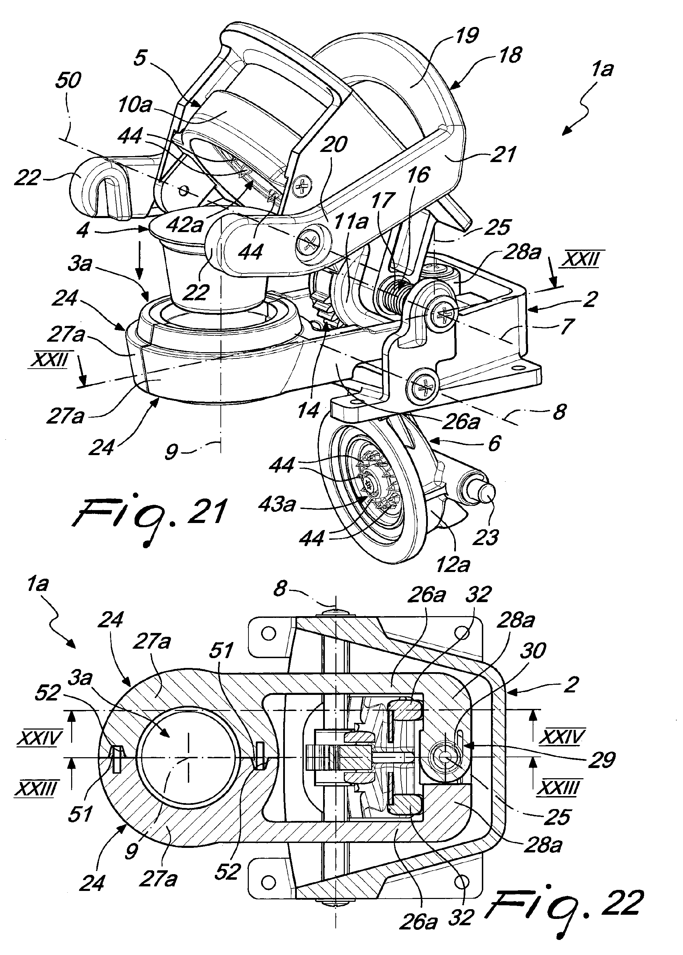

Due to the torsion spring 17, the upper element 5 and the lower element 6 remain in their open position so as to allow the user to insert a new capsule 4 or a new pod 45, as shown in Figures 21 and 35.

Once the new capsule 4 or the new pod 45 has been inserted, again by gripping the handle 18, the user closes again the upper element 5 and the lower element 6, returning them to the closed position of Figures 1 and 29.

In the last transition, the cam elements 32, which are initially accommodated in the cavities 34, are able to pass beyond the step 33 thanks to the elastically flexible support 35.

In practice it has been found that the infusion assembly, particularly for capsules and/or pods for obtaining infused beverages and the like, according to the present invention, fully achieves the intended aim and objects, since with a simple, quick and safe operation it is possible to change pod or capsule by ejecting automatically the already-filtered pod or capsule.

The infusion assembly, particularly for capsules and/or pods for obtaining infused beverages and the like, thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. MI2011A000877 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An infusion assembly (1a, 1b) for capsules and/or pods for obtaining infused beverages and the like, comprising a main body (2) associable with a coffee machine or the like and supporting a plurality of elements (5, 6, 24) adapted to define an infusion chamber (3a, 3b) adapted to accommodate a capsule or pod (4, 45) for infusions, said infusion chamber (3a, 3b) being delimited at least in an upper region and at least in a lower region, respectively, by an upper element (5) and a lower element (6), which are pivoted to said main body (2), respectively, about two pivoting axes (7, 8) which are substantially parallel to each other and are substantially perpendicular to the axis of revolution (9) of said infusion chamber (3a, 3b), said upper element (5) and said lower element (6) being connected kinematically to each other for their synchronized movement between a closed position, in which said upper element (5) and said lower element (6) delimit said infusion chamber (3a, 3b), and an open position, in which said upper element (5) and said lower element (6) are spaced from said infusion chamber (3a, 3b) to evacuate said capsule or pod (4, 45) from said infusion chamber (3a, 3b), **characterized in that** said infusion chamber (3a, 3b) is delimited laterally by a pair of jaw elements (24), which are reciprocally engageable and are pivoted to said main body (2) about a third pivoting axis (25), which is substantially perpendicular to said two pivoting axes (7, 8), for their disengagement with consequent evacuation of said capsule or pod (4, 45) by gravity from said infusion chamber (3a, 3b), said jaw elements (24) being connected kinematically to at least said upper element (5) or said lower element (6) for their synchronized movement with said upper element (5) and said lower element (6) during transition from said closed position to said open position.

2. The infusion assembly (1a, 1b) according to claim 1, **characterized in that** said upper element (5) is provided by a first lever (10a), which is substantially disk-shaped with a first tab (11a) which is pivoted to said main body (2) about a first pivoting axis (7), said first lever (10a) defining at least one infusion channel (36) which is connected to said infusion chamber (3a, 3b) when said upper element (5) is arranged in said closed position.

3. The infusion assembly (1a, 1b) according to one or more of the preceding claims, **characterized in that** said lower element (6) is provided by a second lever (12a), which is substantially disk-shaped with a second tab (13a) which is pivoted to said main body (2) about a second pivoting axis (8) parallel to said first pivoting axis (7), said second lever (12a) defining at least one discharge channel (37) which is connected to said infusion chamber (3a, 3b) when said lower element (6) is arranged in said closed position.

4. The infusion assembly (1a, 1b) according to claim 3, **characterized in that** said first tab (11a) and said second tab (13a) are kinematically connected to each other through two toothed profiles (14, 15), which are defined directly by said tabs (11a, 13a) and mesh with each other.

5. The infusion assembly (1a, 1b) according to one or more of the preceding claims, **characterized in that** said upper element (5) and said lower element (6) are movable from said open position to said closed position and vice versa, respectively, in contrast with and due to the action of first elastic means (16), which are interposed between said main body (2) and at least one between said upper element (5) and said lower element (6).

6. The infusion assembly (1a, 1b) according to one or more of the preceding claims, **characterized in that** it comprises at least one handle (18) which is substantially U-shaped, the curved portion (19) of said handle (18) protruding from said upper element (5) and the central portions (20) of the arms (21) of said handle (18) being pivoted to said upper element (5), in said closed position the end portions (22) of said arms (21) being engageable with respective retention pins (23) defined by said lower element (6) to lock said upper element (5) and said lower element (6).

7. The infusion assembly (1a, 1b) according to claim 3, **characterized in that** said jaw elements (24) are provided by two third levers (26a, 26b), each of which has a substantially C-shaped portion (27a, 27b), such as to surround said capsule or pod (4, 45) completely together with the other substantially C-shaped portion (27a, 27b) of the other third lever (26a, 26b), each one of said third levers (26a, 26b) comprising an end portion (28a, 28b) which is spaced from said substantially C-shaped portion (27a, 27b), is pivoted to said main body (2) about said third pivoting axis (25) and is kinematically connected to at least one between said upper element (5) and said lower element (6).

8. The infusion assembly (1a, 1b) according to claim 5, **characterized in that** said jaw elements (24) are movable from an engagement position, which corresponds to said closed position of said upper element (5) and of said lower element (6), to a disengagement position, which corresponds to a position that is intermediate between said closed position and said open position of said upper element (5) and of said lower element (6), and vice versa, respectively, in contrast with and by the action of second elastic means (29) which are interposed between said main body (2) and said jaw elements (24).

9. The infusion assembly (1a, 1b) according to claim 1, **characterized in that** each one of said end portions (28a, 28b) of said jaw elements (24) comprises an inclined plane (31) that is engageable by sliding, during transition between said engagement position and said disengagement position, with a respective cam element (32) which is associated with said upper element (5) for the rotation of said jaw element (24) about said third pivoting axis (25).

10. The infusion assembly (1a, 1b) according to claim 9, **characterized in that** each one of said inclined planes (31) ends in a downward region with a step (33) which is adapted to define a cavity (34) such as to accommodate the respective said cam element (32) for the return of the respective said jaw elements (24) in said engagement position through the action of said second elastic means (29).

11. The infusion assembly (1a, 1b) according to claim 10, **characterized in that** each one of said cam elements (32) is associated with said upper element (5) by means of an elastically flexible support (35) such as to allow said cam element (32) to pass beyond the respective said step (33) in the final part of the transition from said open position to said closed position.

12. The infusion assembly (1a, 1b) according to one or more of the preceding claims, **characterized in that** said infusion chamber (3a) is shaped geometrically to accommodate at least one infusion capsule (4).

13. The infusion assembly (1a, 1b) according to one or more of the preceding claims, **characterized in that** it comprises adapter means (38) of said capsule (4) or pod (45) in said infusion chamber (3a, 3b).

14. The infusion assembly (1a, 1b) according to claim 13, **characterized in that** said adapter means (38) comprise a body (39) insertable by form-fit engagement between said substantially C-shaped portions (27a, 27b) of said jaw elements (24), said body (39) being of the hollow through type to define said infusion chamber (3a, 3b).

15. The infusion assembly (1b) according to one or more of claims 1 to 12, **characterized in that** said infusion chamber (3b) is shaped geometrically to accommodate at least one pod (45) for infusions.

## Patentansprüche

1. Ein Aufgussaufbau (1a, 1b) für Kapseln und/oder Pads zur Herstellung aufgegossener Getränke und Ähnlichem, der einen Hauptkörper (2) umfasst, der mit einer Kaffeemaschine oder Ähnlichem verbunden werden kann und eine Vielzahl von Elementen (5, 6, 24) trägt, ausgebildet, um eine Aufgusskammer (3a, 3b) zu bestimmen, ausgebildet, um eine Kapsel oder ein Pad (4, 45) für Aufgüsse aufzunehmen, wobei die Aufgusskammer (3a, 3b) mindestens in einem oberen Bereich und mindestens in einem unteren Bereich von einem oberen Element (5) beziehungsweise einem unteren Element (6) begrenzt wird, die entsprechend an dem Hauptkörper (2) drehgelenkig um zwei Drehachsen (7, 8) angeordnet sind, die im Wesentlichen parallel zueinander und im Wesentlichen senkrecht zur Umdrehungsachse (9) der Aufgusskammer (3a, 3b) sind, wobei das obere Element (5) und das untere Element (6) kinematisch miteinander verbunden sind zum Zwecke ihrer synchronisierten Bewegung zwischen einer geschlossenen Position, in der das obere Element (5) und das untere Element (6) die Aufgusskammer (3a, 3b) begrenzen, und einer offenen Position, in welcher das obere Element (5) und das untere Element (6) von der Aufgusskammer (3a, 3b) beabstandet sind, um die Kapsel oder das Pad (4, 45) aus der Aufgusskammer (3a, 3b) zu entfernen, **dadurch gekennzeichnet, dass** die Aufgusskammer (3a, 3b) seitlich durch ein Paar von Klauenelementen (24) begrenzt wird, die ineinander eingreifen können und mit dem Hauptkörper (2) drehgelenkig um eine dritte Drehachse (25) verbunden sind, die im Wesentlichen senkrecht zu den zwei Drehachsen (7, 8) ist, zum Zwecke ihrer Lösung mit daraus folgendem Entfernen der Kapsel oder des Pads (4, 45) aus der Aufgusskammer (3a, 3b) durch die Schwerkraft, wobei die Klauenelemente (24) kinematisch mit mindestens dem oberen Element (5) oder dem unteren Element (6) verbunden sind, zum Zwecke ihrer synchronisierten Bewegung mit dem oberen Element (5) und dem unteren Element (6) während des Übergangs von der geschlossenen Position in die offene Position.

2. Der Aufgussaufbau (1a, 1b) gemäß Anspruch 1, **dadurch gekennzeichnet, dass** das obere Element (5) mit einem ersten Hebel (10a) ausgestattet ist, der im Wesentlichen scheibenförmig ist, mit einer ersten Lasche (11a), die drehgelenkig um eine erste Drehachse (7) an dem Hauptkörper (2) angeordnet ist, wobei der erste Hebel (10a) mindestens einen Aufgusskanal (36) bestimmt, der mit der Aufgusskammer (3a, 3b) verbunden ist, wenn das obere Element (5) sich in der geschlossenen Position befindet.

3. Der Aufgussaufbau (1a, 1b) gemäß einem oder mehreren der obigen Ansprüche, **dadurch gekennzeichnet, dass** das untere Element (6) von einem zweiten Hebel (12a) bereitgestellt wird, der im Wesentlichen scheibenförmig ist, mit einer zweiten Lasche (13a), die drehgelenkig um eine zweite Drehachse (8), parallel zu der ersten Drehachse (7), an dem Hauptkörper (2) angeordnet ist, wobei der zweite Hebel (12a) mindestens einen Auslasskanal (37) bestimmt, der mit der Aufgusskammer (3a, 3b) verbunden ist, wenn sich das untere Element (6) in der geschlossenen Position befindet.

4. Der Aufgussaufbau (1a, 1b) gemäß Anspruch 3, **dadurch gekennzeichnet, dass** die erste Lasche (11a) und die zweite Lasche (13a) miteinander kinematisch über zwei gezahnte Profile (14, 15) verbunden sind, die direkt von den Laschen (11a, 13a) bestimmt werden und ineinander eingreifen.

5. Der Aufgussaufbau (1a, 1b) gemäß einem oder mehreren der obigen Ansprüche, **dadurch gekennzeichnet, dass** das obere Element (5) und das untere Element (6) aus der offenen Position in die geschlossene Position und umgekehrt im Kontrast zu beziehungsweise aufgrund der Wirkung erster elastischer Mittel (16) bewegt werden können, die zwischen dem Hauptkörper (2) und mindestens dem oberen Element (5) und/oder dem unteren Element (6) angeordnet sind.

6. Der Aufgussaufbau (1a, 1b) gemäß einem oder mehreren der obigen Ansprüche, **dadurch gekennzeichnet, dass** er mindestens einen Griff (18) umfasst, der im Wesentlichen U-förmig ist, wobei der gekrümmte Abschnitt (19) des Griffs (18) aus dem oberen Element (5) herausragt und die zentralen Abschnitte (20) der Arme (21) des Griffs (18) drehgelenkig mit dem oberen Element (5) verbunden sind, wobei in der geschlossenen Position die Endabschnitte (22) der Arme (21) mit entsprechenden Haltestiften (23) in Eingriff gebracht werden können, die von dem unteren Element (6) bestimmt werden, um das obere Element (5) und das untere Element (6) zu verriegeln.

7. Der Aufgussaufbau (1a, 1b) gemäß Anspruch 3, **dadurch gekennzeichnet, dass** die Backenelemente (24) von zwei dritten Hebeln (26a, 26b) bereitgestellt werden, die jeweils einen im Wesentlichen C-förmigen Abschnitt (27a, 27b) haben, um zusammen mit dem anderen im Wesentlichen C-förmigen Abschnitt (27a, 27b) des anderen dritten Hebels (26a, 26b) die Kapsel oder das Pad (4, 45) vollständig zu umgeben, wobei jeder der dritten Hebel (26a, 26b) einen Endabschnitt (28a, 28b) umfasst, der von dem im Wesentlichen C-förmigen Abschnitt (27a, 27b) beabstandet ist, um die dritte Drehachse (25) drehgelenkig mit dem Hauptkörper (2) verbunden und kinematisch mindestens mit dem oberen Element (5) und/oder dem unteren Element (6) verbunden ist.

8. Der Aufgussaufbau (1a, 1b) gemäß Anspruch 5, **dadurch gekennzeichnet, dass** die Backenelemente (24) aus einer Eingriffsposition, die der geschlossenen Position des oberen Elements (5) und des unteren Elements (6) entspricht, in eine Lösungsposition bewegt werden können, die einer Position entspricht, die intermediär zwischen der geschlossenen Position und der offenen Position des oberen Elements (5) und des unteren Elements (6) ist, und umgekehrt, im Kontrast zu der beziehungsweise durch die Wirkung zweiter elastischer Mittel (29), die zwischen dem Hauptkörper (2) und den Backenelementen (24) angeordnet sind.

9. Der Aufgussaufbau (1, 1b) gemäß Anspruch 1, **dadurch gekennzeichnet, dass** jeder der Endabschnitte (28a, 28b) der Backenelemente (24) eine schräge Ebene (31) umfasst, die durch Gleiten, während des Übergangs zwischen der Eingriffsposition und der Lösungsposition, mit einem entsprechenden Nockenelement (32) in Eingriff gebracht werden kann, das mit dem oberen Element (5) verbunden ist, zum Zwecke der Drehung des Backenelements (24) um die dritte Drehachse (25).

10. Der Aufgussaufbau (1a, 1b) gemäß Anspruch 9, **dadurch gekennzeichnet, dass** jede der schrägen Ebenen (31) in einem unteren Bereich in einer Stufe (33) endet, die ausgebildet ist, um einen Hohlraum (34) zu bestimmen, um das entsprechende Nockenelement (32) aufzunehmen, zum Zwecke der Rückkehr der jeweiligen Backenelemente (24) in die Eingriffsposition durch die Wirkung der zweiten elastischen Mittel (29).

11. Der Aufgussaufbau (1a, 1b) gemäß Anspruch 10, **dadurch gekennzeichnet, dass** jedes der Nockenelemente (32) mit dem oberen Element (5) durch einen elastisch biegsamen Träger (35) verbunden ist, um es dem Nockenelement (32) zu ermöglichen, im abschließenden Teil des Übergangs von der offenen Position in die geschlossene Position über die entsprechende Stufe (33) hinaus zu gelangen.

12. Der Aufgussaufbau (1a, 1b) gemäß einem oder mehreren der obigen Ansprüche, **dadurch gekennzeichnet, dass** die Aufgusskammer (3a) geometrisch geformt ist, um mindestens eine Aufgusskapsel (4) aufzunehmen.

13. Der Aufgussaufbau (1a, 1b) gemäß einem oder mehreren der obigen Ansprüche, **dadurch gekennzeichnet, dass** er Adaptermittel (38) der Kapsel (4) oder des Pads (45) in der Aufgusskammer (3a, 3b) umfasst.

14. Der Aufgussaufbau (1a, 1b) gemäß Anspruch 13, dadurch gekennzeichnet, dass die Adaptermittel (38) einen Körper (39) umfassen, der durch formschlüssigen Eingriff zwischen die im Wesentlichen C-förmigen Abschnitte (27a, 27b) der Backenelemente (24) eingesetzt werden kann, wobei der Körper (39) von der durchgängig hohlen Art ist, um die Aufgusskammer (3a, 3b) zu bestimmen.

15. Der Aufgussaufbau (1b) gemäß einem oder mehreren der Ansprüche 1 bis 12, **dadurch gekennzeichnet, dass** die Aufgusskammer (3b) geometrisch geformt ist, um mindestens ein Pad (45) für Aufgüsse aufzunehmen.

## Revendications

1. Dispositif d'infusion (1a, 1b) pour capsules et/ou dosettes pour obtenir des boissons infusées et similaires, comprenant un corps principal (2) pouvant être associé à une machine à café ou similaire et supportant une pluralité d'éléments (5, 6, 24) adaptés à définir une chambre d'infusion (3a, 3b) adaptée à loger une capsule (4) ou dosette (45) pour infusions, ladite chambre d'infusion (3a, 3b) étant délimitée au moins dans une zone supérieure et au moins dans une zone inférieure, respectivement, par un élément supérieur (5) et un élément inférieur (6) qui sont pivotés vers ledit corps principal (2), respectivement, autour de deux axes de pivotement (7, 8) qui sont essentiellement parallèles l'un par rapport à l'autre et essentiellement perpendiculaires à l'axe de révolution (9) de ladite chambre d'infusion (3a, 3b), ledit élément supérieur (5) et ledit élément inférieur (6) étant reliés cinématiquement l'un à l'autre pour leur mouvement synchronisé entre une position fermée, dans laquelle ledit élément supérieur (5) et ledit élément inférieur (6) délimitent ladite chambre d'infusion (3a, 3b), et une position ouverte, dans laquelle ledit élément supérieur (5) et ledit élément inférieur (6) sont espacés par rapport à ladite chambre d'infusion (3a, 3b) pour évacuer ladite capsule ou dosette (4, 45) de ladite chambre d'infusion (3a, 3b), **caractérisé en ce que** ladite chambre d'infusion (3a, 3b) est délimitée latéralement par une paire d'éléments à mâchoires (24) qui peuvent être mis en prise l'un dans l'autre et sont pivotés vers le corps principal (2) autour d'un troisième axe de pivotement (25) qui est essentiellement perpendiculaire auxdits deux axes de pivotement (7, 8) pour leur mise hors prise ayant pour conséquence l'évacuation de ladite capsule ou dosette (4, 45) par gravité depuis ladite chambre d'infusion (3a, 3b) lesdits éléments à mâchoires (24) étant reliés cinématiquement au moins audit élément supérieur (5) ou audit élément inférieur (6) pour leur mouvement synchronisé avec ledit élément supérieur (5) et ledit élément inférieur (6) au cours de la transition entre ladite position fermée et ladite position ouverte.

2. Dispositif d'infusion (1a, 1b) suivant la revendication 1, **caractérisé en ce que** ledit élément supérieur (5) est constitué par un premier levier (10a) qui présente essentiellement la forme d'un disque avec une première patte (11a) qui est pivotée vers ledit corps principal (2) autour d'un premier axe de pivotement (7), ledit premier levier (10a) définissant au moins un canal d'infusion (36) qui est relié à ladite chambre d'infusion (3a, 3b) lorsque ledit élément supérieur (5) est disposé dans ladite position fermée.

3. Dispositif d'infusion (1a, 1b) suivant une ou plusieurs des revendications précédentes, **caractérisé en ce que** ledit élément inférieur (6) est constitué par un second levier (12a) qui présente essentiellement la forme d'un disque avec une seconde patte (13a) qui est pivotée vers ledit corps principal (2) autour d'un second axe de pivotement (8) parallèle audit premier axe de pivotement (7), ledit second levier (12a) définissant au moins un canal d'évacuation (37) qui est relié à ladite chambre d'infusion (3a, 3b) lorsque ledit élément inférieur (6) est disposé dans ladite position fermée.

4. Dispositif d'infusion (1a, 1b) suivant la revendication 3, **caractérisé en ce que** ladite première patte (11a) et ladite seconde patte (13a) sont reliées cinématiquement l'une à l'autre par l'intermédiaire de deux profils crantés (14, 15) qui sont définis directement par lesdites pattes (11a, 13a) et s'engrènent l'un dans l'autre.

5. Dispositif d'infusion (1a, 1b) suivant une ou plusieurs des revendications précédentes, **caractérisé en ce que** ledit élément supérieur (5) et ledit élément inférieur (6) sont respectivement déplaçables depuis ladite position ouverte à ladite position fermée et vice versa, contrairement à et sous l'effet de l'action de premiers moyens élastiques (16) qui sont interposés entre ledit corps principal (2) et au moins un parmi ledit élément supérieur (5) et ledit élément inférieur (6).

6. Dispositif d'infusion (1a, 1b) suivant une ou plusieurs des revendications précédentes, **caractérisé en ce qu'**il comprend au moins une poignée (18) qui présente essentiellement la forme d'un U, la portion courbée (19) de ladite poignée (18) faisant saillie depuis ledit élément supérieur (5) et les portions centrales (20) des bras (21) de ladite poignée (18) étant pivotées vers ledit élément supérieur (5), les portions d'extrémité (22) desdits bras (21) pouvant être mises en prise, dans ladite position fermée, avec des goujons de retenue respectifs (23) définis par ledit élément inférieur (6) pour verrouiller ledit élément supérieur (5) et ledit élément inférieur (6).

7. Dispositif d'infusion (1a, 1b) suivant la revendication 3, **caractérisé en ce que** lesdits éléments à mâchoires (24) sont constitués par deux troisièmes leviers (26a, 26b), dont chacun présente une portion essentiellement en forme de C (27a, 27b), de façon à entourer entièrement ladite capsule ou dosette (4, 45) avec l'autre portion essentiellement en forme de C (27a, 27b) de l'autre troisième levier (26a, 26b), chacun desdits troisièmes leviers (26a, 26b) comprenant une portion d'extrémité (28a, 28b) qui est espacée de ladite portion essentiellement en forme de C (27a, 27b), pivotée vers ledit corps principal (2) autour dudit troisième axe de pivotement (25) et reliée cinématiquement à au moins un parmi ledit élément supérieur (5) et ledit élément inférieur (6).

8. Dispositif d'infusion (1a, 1b) suivant la revendication 5, **caractérisé en ce que** lesdits éléments à mâchoires (24) sont déplaçables depuis une position en prise qui correspond à ladite position fermée dudit élément supérieur (5) et dudit élément inférieur (6) à une position hors prise qui correspond respectivement à une position intermédiaire entre ladite position fermée et ladite position ouverte dudit élément supérieur (5) et dudit élément inférieur (6) et vice versa, contrairement à et sous l'effet de l'action de seconds moyens élastiques (29) qui sont interposés entre ledit corps principal (2) et lesdits éléments à mâchoires (24).

9. Dispositif d'infusion (1a, 1b) suivant la revendication 1, **caractérisé en ce que** chacune desdites portions d'extrémité (28a, 28b) desdits éléments à mâchoires (24) comprend un plan incliné (31) qui peut être mis en prise par coulissement, au cours de la transition entre ladite position en prise et ladite position hors prise, avec un élément de came respectif (32) qui est associé audit élément supérieur (5) pour la rotation dudit élément à mâchoires (24) autour dudit troisième axe de pivotement (25).

10. Dispositif d'infusion (1a, 1b) suivant la revendication 9, **caractérisé en ce que** chacun desdits plans inclinés (31) se termine au niveau d'une zone inférieure comportant un étage (33) qui est adapté à définir une cavité (34) permettant de loger ledit élément de came respectif (32) pour le retour desdits éléments à mâchoires respectifs (24) dans ladite position en prise grâce à l'action desdits seconds moyens élastiques (29).

11. Dispositif d'infusion (1a, 1b) suivant la revendication 10, **caractérisé en ce que** chacun des éléments de came (32) est associé audit élément supérieur (5) au moyen d'un support élastiquement souple (35) permettant audit élément de came (32) de passer au-delà dudit étage respectif (33) au cours de la dernière partie de transition de ladite position ouverte à ladite position fermée.

12. Dispositif d'infusion (1a, 1b) suivant une ou plusieurs des revendications précédentes, **caractérisé en ce que** ladite chambre d'infusion (3a) est formée géométriquement de façon à y loger au moins une capsule d'infusion (4).

13. Dispositif d'infusion (1a, 1b) suivant une ou plusieurs des revendications précédentes, **caractérisé en ce qu'**il comprend des moyens d'adaptation (38) de ladite capsule (4) ou dosette (45) dans ladite chambre d'infusion (3a, 3b)

14. Dispositif d'infusion (1a, 1b) suivant la revendication 13, **caractérisé en ce que** lesdits moyens d'adaptation (38) comprennent un corps (39) pouvant être inséré, de façon à entrer en prise par complémentarité des formes, entre lesdites portions essentiellement en forme de C (27a, 27b) desdits éléments à mâchoires (24), ledit corps (39) étant de type traversant creux pour définir ladite chambre d'infusion (3a, 3b).

15. Dispositif d'infusion (1a, 1b) suivant une ou plusieurs des revendications 1 à 12, **caractérisé en ce que** ladite chambre d'infusion (3b) est formée géométriquement de façon à y loger au moins une dosette (45) pour infusions.
